# FASCICULE DE BREVET EUROPEEN

(11) **EP 0 821 250 B1**
(45) Date de publication et mention de la délivrance du brevet: **21.03.2007**
(21) Numéro de dépôt: 97410074.5
(22) Date de dépôt: 10.07.1997
(51) Int. Cl.: G02B 6/12, H01S 5/026, G02F 1/01, G02F 1/035

(54) **Dispositif d'optique intégrée avec des zones de guidage actives et passives**
Integrierte optische Einrichtung mit aktiven und passiven Wellenleiterbereichen
Integrated optical device with active and passive waveguide zones

(30) Priorité: 24.07.1996 FR 9609536
(43) Date de publication de la demande: 28.01.1998
(73) Titulaire: SCHNEIDER ELECTRIC INDUSTRIES SAS, 92500 Rueil-Malmaison (FR)
(72) Inventeur: Broquin, Jean-Emmanuel, 38050 Grenoble Cedex 09 (FR); Rimet, Roger, 38050 Grenoble Cedex 09 (FR)
(74) Mandataire: Jouvray, Marie-Andrée

(56) Documents cités:
- EP-A- 0 415 167
- WO-A-95/13553
- FR-A- 2 381 328
- US-A- 5 381 262
- SOTTINI S ET AL: "Optical fiber-polymer guide coupling by a tapered graded index glass guide" IEEE JOURNAL OF QUANTUM ELECTRONICS, vol. 31, no. 6, 1 juin 1995, pages 1123-1130, XP000510144
- SCHLOTTER N E ET AL: "Fabrication of channel waveguides in polydiacetylenes: Composite diffused glass/polymer structures" APPLIED PHYSICS LETTERS, vol. 56, no. 1, 1 janvier 1990, pages 13-15, XP000126784
- FAWCETT G ET AL: "In-line fibre-optic intensity modulator using electro-optic polymer" ELECTRONICS LETTERS, vol. 28, no. 11, 21 mai 1992, pages 985-986, XP000305870
- P. G. SUCHOSKI JR., R. V. RAMASWAMY: "Design of single-mode step-tapered waveguide sections" IEEE JOURNAL OF QUANTUM ELECTRONICS, vol. QE-23, no. 2, 1 février 1987 (1987-02-01), pages 205-211,

## Description

L'invention concerne un dispositif d'optique intégrée comportant un substrat de verre, une couche mince active, plane guidante, déposée sur une surface du substrat, et une zone en forme de canal réalisée dans le substrat par échange d'ions et comportant un premier tronçon, de section prédéterminée, affleurant à ladite surface et recouvert par la couche mince de manière à délimiter latéralement une zone de confinement d'une onde lumineuse dans la couche mince pour former un guide monomode à confinement latéral par le substrat.

Un dispositif optique actif connu réalisé en optique intégrée, comporte un film polymère déposé sur un substrat de verre et formant une couche guidante pour la lumière. Un canal, non guidant, formé par échange d'ions dans le substrat au dessous du film polymère définit un confinement latéral des ondes lumineuses dans la partie de la couche mince recouvrant le canal. Il a été proposé d'utiliser ce type de dispositif optique pour des commutateurs optiques (Article de N.E. SCHLOTTER et al. : "Fabrication of Channel waveguides in polydiacetylenes : composite diffused glass/polymer structures", Appl. Phys. Lett. 56 (1), (01/01/90).

L'article "opical fiber-polymer guide coupling by a tapered graded index glass guide" de S. Sottini et al., IEEE J. Quantum Elect., vol;31 (1995), n°6, p.1123-1130, décrit la passage progressif d'un faisceau lumineux d'un guide formé dans un substrat à un film polymère recouvrant une partie centrale du substrat dans laquelle le guide est interrompu. La transition entre le guide et le film est favorisée par une variation d'épaisseur du guide et du film dans les zones de transition.

L'invention a pour but un dispositif optique permettant de réaliser à faible coût des composants optiques actifs, tels que des modulateurs, des amplificateurs, des capteurs, des commutateurs ou des lasers.

Selon l'invention, ce but est atteint par le fait que, la couche mince couvrant partiellement ladite surface du substrat, le premier tronçon est prolongé dans le substrat par au moins un second tronçon, non recouvert par la couche mince, en forme de canal, formé par échange d'ions et de section prédéterminée supérieure à la section du premier tronçon, de manière à former dans le substrat un guide monomode passif.

L'intégration sur un même substrat de zones de guidage passives réalisées par échange d'ions et de zones de guidage actives utilisant le guidage par l'onde évanescente et réalisées en combinant les techniques de l'échange d'ions et du dépôt de couches, permet d'obtenir un dispositif optique actif à la fois performant et peu coûteux.

Le passage des ondes lumineuses des zones de guidage passives aux zones de guidage actives et réciproquement est optimisé en ce qu'au moins un bord de la couche mince coupe l'axe du canal obliquement sous un angle prédéterminé, faible, de manière à délimiter dans le canal au moins une portion axiale totalement recouverte, une portion axiale totalement découverte et une portion axiale partiellement recouverte, permettant le passage adiabatique de la lumière entre le second tronçon et la couche mince.

La portion axiale totalement recouverte est formée par le premier tronçon, la portion axiale totalement découverte par le second tronçon et la portion axiale partiellement recouverte par un tronçon intermédiaire de section variable comprise entre les sections des premier et second tronçons.

D'autres avantages et caractéristiques ressortiront plus clairement de l'exposé qui va suivre de modes de réalisation particuliers de l'invention, donnés à titre d'exemples non limitatifs et représentés aux dessins annexés sur lesquels :
La figure 1 illustre un dispositif à guidage actif selon l'art antérieur,
La figure 2 représente, vu de dessus, un dispositif selon l'invention,
La figure 3 illustre les variations de la profondeur de l'axe de propagation de la lumière par rapport à la face supérieure du substrat du dispositif selon la figure 2,
Les figures 4 à 6 représentent respectivement des coupes selon A-A, B-B et C-C du dispositif selon la figure 2.

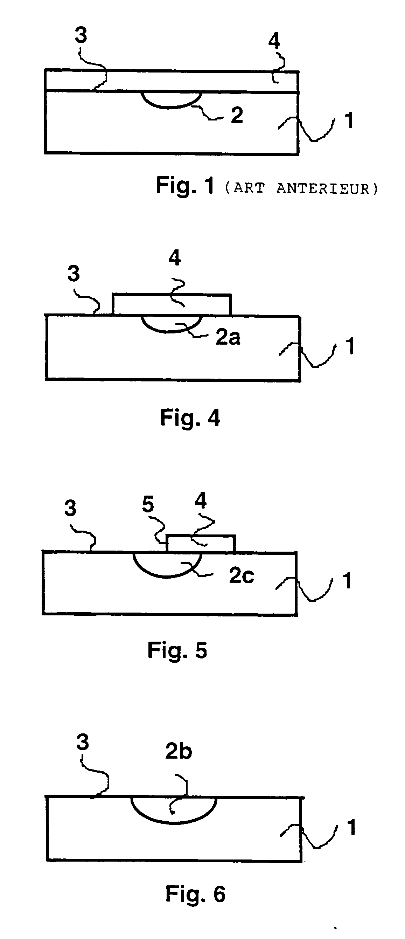

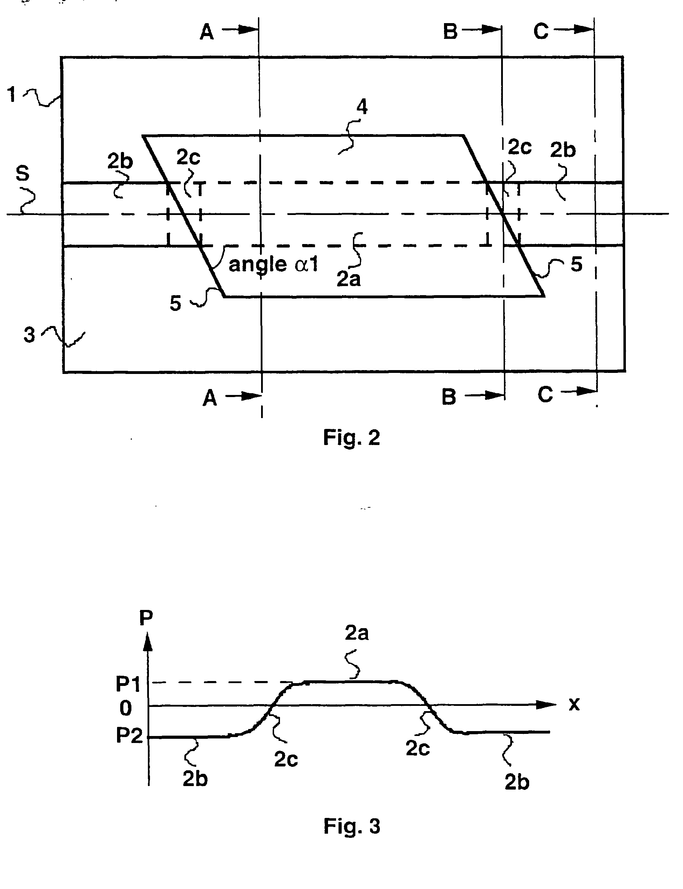

Le guide monomode à confinement par le substrat de la figure 1 comporte un substrat de verre 1 dans lequel un canal 2 est réalisée par échange d'ions. Le canal 2 affleure à la surface 3 (face supérieure sur la figure 1) du substrat 1. Une couche mince 4, plane, guidante, est déposée sur la surface 3. Dans un tel dispositif, les ondes lumineuses sont guidées dans la couche 4. Le canal 2 en contact avec la partie évanescente des ondes lumineuses provoque un confinement latéral de la lumière dans la couche 4 au voisinage du canal 2. On obtient ainsi un guidage horizontal des ondes lumineuses.

Le dispositif selon les figures 2 et 4 à 6 combine sur un même substrat de verre 1 les techniques de guidage passif et de guidage latéral par l'onde évanescente. La couche mince 4 ne recouvre qu'une partie de la surface 3 du substrat de verre. Le canal 2, réalisée par échange d'ions dans le substrat comporte un premier tronçon 2a, recouvert par la couche mince 4. Cette partie du dispositif forme un guide à confinement par le substrat du même type que sur la figure 1. Le premier tronçon 2a est prolongé dans le substrat par des seconds tronçons 2b, non recouverts par la couche mince 4. Sur la figure 2, les seconds tronçons 2b prolongent le tronçon 2a à ses deux extrémités. Les tronçons 2b réalisés par échange d'ions forment dans le substrat un guide passif.

Dans le mode de réalisation des figures 4 et 6, les premier et second tronçons 2a et 2b affleurent à la surface 3 du substrat. Ils se distinguent par leur section. La section du premier tronçon 2a est inférieure à la section du second tronçon 2b, ces sections étant telles que, pour une longueur d'onde prédéterminée, le premier tronçon est non guidant tandis que le second tronçon est guidant.

Pour permettre à l'onde lumineuse de passer avec un minimum de pertes du guide monomode passif situé dans le substrat, constitué par le tronçon 2b, au guide monomode à confinement par le substrat, constitué par la couche mince 4 et le tronçon 2a, et réciproquement, la couche mince 4 comporte un bord 5 qui coupe obliquement la zone 2 en forme de canal sous un angle α1 prédéterminé. L'angle α1, très exagéré sur la figure 2 pour des raisons de clarté, est très faible, de préférence inférieur à un degré environ. Le bord 5 délimite ainsi dans le canal 2 une portion axiale totalement recouverte formée par le premier tronçon 2a, une portion axiale totalement découverte formée par le second tronçon 2b et une portion axiale partiellement recouverte formée par un tronçon intermédiaire 2c disposé entre les premier et second tronçons. Comme représenté à la figure 5, la section du tronçon intermédiaire est comprise entre les sections des premier (2a) et second (2b) tronçons.

A titre d'exemple non limitatif, la couche mince 4 peut avoir une épaisseur inférieur à 10 micromètres, de préférence inférieure à 3 micromètres. Elle est typiquement de l'ordre de 1 micromètre, et l'angle α1 est inférieur à 1°, de préférence voisin de 0,5°.

Sur la figure 2, la couche mince 4 a sensiblement la forme d'un parallélogramme ayant deux côtés parallèles à un axe S de la zone 2 en forme de canal et deux côtés 5 faisant un angle α1 avec l'axe S et forment chacun une zone de transition entre un tronçon 2b et un tronçon 2a.

Avec le dispositif des figures 2, et 4 à 6, les variations de la profondeur P de propagation d'une onde lumineuse, en fonction de sa position x le long de l'axe S sont telles que représentées à la figure 3. La profondeur nulle correspondant à la surface 3 du substrat 1, l'onde lumineuse se propage à une profondeur P2, négative, dans les tronçons 2b et à une profondeur P1, positive dans la partie de la couche 4 recouvrant le tronçon 2a. La largeur de la zone de transition entre les profondeurs P1 et P2 dépend de l'angle α1 et de la largeur du canal 2.

Le passage de la lumière se fait ainsi de façon adiabatique du guide monomode passif situé dans le substrat au guide monomode à confinement par le substrat, et réciproquement.

La couche mince 4 peut être réalisée en tout matériau qui interagit avec la lumière pour permettre, selon le cas, d'amplifier, moduler, absorber, commuter ou capter une onde lumineuse. A titre d'exemple, on peut utiliser des oxydes, des verres, des polymères. La couche mince peut être déposée par tout procédé approprié, en particulier par un procédé sol-gel, ou par pulvérisation cathodique. La couche peut être dopée avec des terres rares.

La condition d'adiabaticité est déterminée par l'angle (α1) d'attaque de la couche mince active et par la différence entre les constantes de propagation de la lumière dans la zone passive d'une part et la zone active d'autre part.

## Revendications

1. Dispositif d'optique intégrée comportant un substrat de verre (1), une couche mince (4) active, plane, guidant la lumière, déposée sur une surface (3) du substrat (1), et un canal (2) réalisé dans le substrat (1) par échange d'ions et comportant un premier tronçon (2a), de section prédéterminée, affleurant à ladite surface (3) et recouvert par la couche mince (4) de manière à délimiter latéralement une zone de confinement d'une onde lumineuse dans la couche mince (4) pour former dans la couche mince (4) un guide monomode à confinement latéral par le substrat (1), dispositif **caractérisé en ce que**, la couche mince (4) couvre partiellement ladite surface (3) du substrat (1), **en ce que** le canal (2) comporte au moins un second tronçon (2b) prolongeant le premier tronçon (2a) et non recouvert par la couche mince (4), le second tronçon (2b) ayant une section prédéterminée supérieure à la section du premier tronçon (2a) de manière à former dans le substrat (1) un guide monomode passif, **en ce qu**'au moins un bord (5) de la couche mince (4) coupe, l'axe du canal (2) obliquement sous un angle prédéterminé (α1) faible, de manière à délimiter dans le canal (2) au moins une portion axiale totalement recouverte et formée par le premier tronçon (2a), une portion axiale totalement découverte et formée par le second tronçon (2b) et une portion axiale partiellement recouverte formée par un tronçon intermédiaire (2c) compris entre les sections des premier et second tronçons (2a, 2b), le tronçon intermédiaire (2c) ayant une section variable permettant le passage adiabatique de la lumière entre le second tronçon (2b) et la couche mince (4).

2. - Dispositif selon la revendication 1, **caractérisé en ce que** l'angle (α1) est inférieur à 1° environ.

3. - Dispositif selon l'une des revendications 1 et 2, **caractérisé en ce que** la couche mince (4) est constituée par un oxyde, un verre ou un polymère.

4. - Dispositif selon la revendication 3, **caractérisé en ce que** la couche mince (4) est dopée avec des terres rares.

## Claims

1. Integrated optic device comprising a glass substrate (1), a flat active light-guiding thin layer (4) deposited on a surface (3) of the substrate (1), and a channel (2) achieved in the substrate (1) by ion exchange and comprising a first section (2a), of predetermined cross-section, flush with said surface (3) and covered by the thin layer (4) in such a way as to laterally delineate a confinement zone of a light wave in the thin layer (4) to form a monomode guide in the thin layer (4) with lateral confinement by the substrate (1), device **characterized in that** the thin layer (4) partially covers said surface (3) of the substrate (1), that the channel (2) comprises at least one second section (2b) extending the first section (2a) and not covered by the thin layer (4), the second section (2b) having a predetermined cross-section larger than the cross-section of the first section (2a) so as to form a passive monomode guide in the substrate (1), and that at least one edge (5) of the thin layer (4) cuts the axis of the channel (2) obliquely at a predetermined small angle (α1) in such a way as to delineate in the channel (2) at least a totally covered axial portion formed by the first section (2a), a totally uncovered axial portion formed by the second section (2b) and a partially covered axial portion formed by an intermediate section (2c) having a cross-section comprised between the cross-sections of the first and second sections (2a, 2b), the intermediate section (2c) having a variable cross-section for adiabatic passage of light between the second section (2b) and the thin layer (4).

2. Device according to claim 1, **characterized in that** the angle (α1) is smaller than about 1 °.

3. Device according to one of the claims 1 and 2, **characterized in that** the thin layer (4) is formed by an oxide, a glass or a polymer.

4. Device according to claim 3, **characterized in that** the thin layer (4) is doped with rare earths.

## Patentansprüche

1. Integriert-optische Einrichtung mit einem Glassubstrat (1), einer auf einer Fläche (3) des Substrats (1) aufgebrachten dünnen, ebenen, aktiven Lichtleitschicht sowie einem durch Ionenaustausch in das Substrat eingebrachten Kanal (2), der ein erstes Teilstück (2a) mit einem bestimmten Querschnitt umfasst, welches Teilstück an die genannte Fläche (3) angrenzt und von der dünnen Schicht (4) abgedeckt ist, so dass in der dünnen Schicht (4) ein seitlich begrenzter Einschlussbereich einer Lichtwelle entsteht, um so einen Monomode-Wellenleiter mit seitlichem Einschluss durch das Substrat (1) zu bilden, **dadurch gekennzeichnet, dass** die genannte Fläche (3) des Substrats (1) teilweise durch die dünne Schicht (4) abgedeckt wird, dass der Kanal (2) mindestens ein zweites Teilstück (2b) umfasst, welches sich an das erste Teilstück (2a) anschließt und nicht von der dünnen Schicht (4) abgedeckt wird, wobei das zweite Teilstück einen bestimmten Querschnitt aufweist, der größer ist als der Querschnitt des ersten Teilstücks (2a), derart dass im Substrat (1) ein passiver Monomode-Wellenleiter gebildet wird, und **dadurch** dass mindestens ein Rand (5) der dünnen Schicht (4) die Achse des Kanals (2) in einem bestimmten, kleinen Winkel (α1) schräg schneidet, so dass im Kanal (2) mindestens ein durch das erste Teilstück (2a) gebildeter, vollständig abgedeckter Axialabschnitt, ein durch das zweite Teilstück (2b) gebildeter, vollständig freiliegender Axialabschnitt sowie ein teilweise abgedeckter Axialabschnitt gebildet werden, welcher durch ein zwischen dem ersten Teilstück (2a) und dem zweiten Teilstück (2b) angeordnetes Zwischenstück (2c) mit veränderlichen Querschnitt gebildet wird, der einen adiabatischen Lichtübergang zwischen dem zweiten Teilstück (2b) und der dünnen Schicht (4) ermöglicht.

2. Einrichtung nach Anspruch 1, **dadurch gekennzeichnet, dass** der Winkel (α1) kleiner als etwa 1 ° ist.

3. Einrichtung nach einem der Ansprüche 1 und 2, **dadurch gekennzeichnet, dass** die dünne Schicht (4) aus einem Oxyd-, einem Glas- oder einem Polymerwerkstoff besteht.

4. Einrichtung nach Anspruch 3, **dadurch gekennzeichnet, dass** die dünne Schicht (4) mit seltenen Erden dotiert ist.
